# EUROPÄISCHE PATENTSCHRIFT

(11) **EP 3 027 953 B1**
(45) Veröffentlichungstag und Bekanntmachung des Hinweises auf die Patenterteilung: **09.10.2019**
(21) Anmeldenummer: 14747523.0
(22) Anmeldetag: 31.07.2014
(51) Int. Cl.: F16L 59/06, F25D 23/06

(54) **VAKUUMDÄMMKÖRPER**
VACUUM INSULATION BODY
ÉLÉMENT D'ISOLATION SOUS VIDE

(30) Priorität: 31.07.2013 DE 102013012794; 09.10.2013 DE 102013016774
(43) Veröffentlichungstag der Anmeldung: 08.06.2016
(73) Patentinhaber: Liebherr-Hausgeräte Lienz GmbH, 9900 Lienz (AT); Liebherr-Hausgeräte Ochsenhausen GmbH, 88416 Ochsenhausen (DE)
(72) Erfinder: HIEMEYER, Jochen, 97753 Karlstadt (DE); FREITAG, Michael, 97082 Würzburg (DE); KERSTNER, Martin, 97072 Würzburg (DE)
(74) Vertreter: Herrmann, Uwe
(86) Internationale Anmeldenummer: PCT/EP2014/002117
(87) Internationale Veröffentlichungsnummer: WO 2015/014499

(56) Entgegenhaltungen:
- JP-A- H0 611 247
- JP-A- S6 166 070
- JP-A- 2000 280 266
- US-A- 4 486 482

## Beschreibung

Die vorliegende Erfindung betrifft einen Vakuumdämmkörper mit einer vakuumdichten Umhüllung und einem Vakuumbereich, der von der Umhüllung umgeben ist, wobei die Umhüllung mit einem Evakuierstutzen, zur Evakuieren des Vakuumbereiches versehen ist, wobei sich in dem Vakuumdämmkörper ein adsorbierendes Material und ein Kernmaterial befinden, wobei wobei das adsorbierende Material teilweise oder insgesamt im Bereich des genannten Evakuierstutzens angeordnet ist.

Aus dem Stand der Technik ist es bekannt, beispielsweise zur Wärmedämmung von Kühl- bzw. Gefriergeräten Vakuumdämmkörper einzusetzen, die sich in dem Bereich zwischen dem Außenmantel des Gerätes und dem Innenbehälter bzw. der Innenseite der Tür befinden.

Derartige Vakuumdämmkörper umfassen eine vakuumdichte Umhüllung und wenigstens einen von der Umhüllung umgebenen Vakuumbereich, in dem sich ein Stütz- bzw. Kernmaterial befindet, das dem Vakuumdämmkörper die erforderliche mechanische Stabilität verleiht und das zudem verhindert, dass die Seiten der Umhüllung aneinander anliegen, wenn Vakuum herrscht.

Derartige Vakuumdämmkörper sind empfindlich gegenüber einem Anstieg des Gasdrucks in dem Vakuumbereich. Ein solches Einbringen von Gas bzw. ein solcher Anstieg des Gasdruckes setzt die Wärmeleitfähigkeit herauf und verringert somit die Wirksamkeit des Wärmedämmkörpers. Insbesondere die Permeation von Wasser durch die Umhüllung des Dämmkörpers ist aufgrund der höheren Permeationsraten im Vergleich zu Sauerstoff und Stickstoff ausschlaggebend für einen Anstieg der Wärmeleitfähigkeit des Vakuumdämmkörpers.

Um dieses Phänomen zu verhindern bzw. möglichst gering zu halten ist es bekannt, ein Material mit einem hohen Adsorptionsvermögen für Wasser in den Vakuumbereich zu geben, um auch bei eindringendem Wasserdampf den Partialdruck im Vakuumbereich gering zu halten. Als solches Material kommt beispielsweise ein Zeolith-Material in Betracht.

Des Weiteren sind Materialien bekannt, die durch Chemisorption von Sauerstoff und Stickstoff deren Partialdruck gering halten. Diese Materialien werden als "Getter" bezeichnet und dienen auch dazu, die Alterung des Vakuumdämmkörpers aufgrund von Gaseintrag dieser Gase zu verzögern.

Aus dem Stand der Technik ist es bekannt, die Vakuumerzeugung in dem Vakuumdämmkörper in einer Vakuumkammer vorzunehmen, was mit einem vergleichsweise hohen apparativen Aufwand verbunden ist. Einfacher ist es, den Vakuumdämmkörper mit einem Evakuierstutzen zu versehen, an dem Unterdruck angelegt wird und durch den Gas aus dem Vakuumbereich abgezogen wird.

In diesem Fall muss das gesamte Gas oder ein wesentlicher Teil des Gases aus dem Innenraum des Vakuumdämmkörpers durch den Evakuierstutzen entfernt werden. Dazu muss das Gas durch das genannte Kernmaterial zu dem Evakuierstutzen strömen bzw. diffundieren.

Das Dokument US 4,486,482 offenbart ein Vakuumdämmkörper mit einer Umhüllung, einem Vakuumbereich und einem Evakuierstutzen. In dem Vakuumbereich befinden sich ein adsorbierendes Material und ein Kernmaterial.

Der vorliegenden Erfindung liegt die Aufgabe zugrunde, einen Vakuumdämmkörper der eingangs genannten Art dahingehend weiterzubilden, dass dieser besonders einfach und effizient evakuiert werden kann.

Diese Aufgabe wird durch einen Vakuumdämmkörper mit den Merkmalen des Anspruchs 1 gelöst. Danach ist vorgesehen, dass der Vakuumdämmkörper einen Strömungsverteiler zur Erhöhung des effektiven Evakuierquerschnittes aufweist, wobei der Strömungsverteiler durch das adsorbierende Material gebildet ist, wobei der Strömungsverteiler in Strömungsrichtung beim Evakuieren vor dem Evakuierstutzen angeordnet ist und wobei der Strömungsverteiler als Kugelschüttung ausgebildet ist, die sich in einem für Gas durchlässigen Säckchen oder Aufnahmebereich befindet.

Bringt man das adsorbierende Material, beispielsweise das Trockenmaterial, wie Zeolithe oder sonstige adsorbierende Materialien, wie beispielsweise die genannten Getter in den Vakuumdämmkörper ein, so müssen zusätzlich zu den in den Poren des Kernmaterials vorhandenen Gasmolekülen auch die schon an der Oberfläche des Trockners bzw. des adsorbierenden Materials adsorbierten Gasteilchen beim Evakuiervorgang entfernt werden. Diese lösen sich jedoch erst bei geringen Drücken von der Oberfläche des adsorbierenden Materials. Da unter Umständen keine Gasströmung mehr vorhanden ist, d.h. keine oder kaum noch Konvektion stattfindet, müssen diese Gasteile zu dem Evakuierstutzen diffundieren.

Dies gilt entsprechend für in den Vakuumbereich eingebrachte Getter. Erfindungsgemäß ist nun vorgesehen, das Gase, insbesondere Wasser und / oder Stickstoff und / oder Sauerstoff, adsorbierende Material teilweise oder insgesamt im Bereich des genannten Evakuierstutzens des Vakuumdämmkörpers anzuordnen. Dort tritt während des Evakuiervorgangs der geringste Druck auf und abgesehen davon ist der Strömungsweg der an dem adsorbierenden Material gebundenen Gasteilchen minimiert, da sich das adsorbierende Material bereits im Bereich des Evakuierstutzens befindet. Wird somit das adsorbierende Material, wie beispielsweise ein Trockner bzw. Getter in unmittelbarer Nähe des Evakuierstutzens angeordnet ergibt sich somit insgesamt eine besonders effiziente Vakuumerzeugung in dem Vakuumbereich des Vakuumdämmkörpers.

Der Strömungsverteiler ist als Kugelschüttung ausgebildet. Der Strömungsverteiler ist durch das adsorbierende Material gebildet. Das Material übt nicht nur die Funktion des Adsorbens, sondern auch die des Strömungsverteilers aus.

Unter einem Strömungsverteiler im Sinne der Erfindung ist ein Material zu verstehen, das den effektiven Strömungsquerschnitt vergrößert und somit die benötigte Zeitdauer zum Evakuieren verringert.

Der genannte Strömungsverteiler ist in Strömungsrichtung beim Evakuieren vor dem Evakuierstutzen angeordnet. Er ist als Kugelschüttung, beispielsweise als Schüttung von Zeolith-Kugeln etc. ausgebildet, die sich in einem Säckchen oder in einem sonstigen Aufnahmebereich befindet, der für Gas durchlässig ist.

Der Durchmesser der einzelnen Körper, insbesondere der Kugeln des adsorbierenden Mittels bzw. des Strömungsverteilers liegt vorzugsweise im Bereich von 3 bis 5 mm. In der Draufsicht bzw. in seiner Erstreckung senkrecht zur Strömungsrichtung durch den Evakuierstutzen beträgt die Dimension des adsorbierenden Materials bzw. des Strömungsverteilers vorzugsweise wenigstens 200 mm x 200 mm.

Durch die Geometrie bedingt ist beim Evakuieren mit Evakuierstutzen im Bereich des Evakuierstutzens ein sehr kleiner Evakuierquerschnitt gegeben, d.h. eine kleine Fläche. Dadurch ist dieser Bereich mit Abstand der kritischste Bereich. Um die Dauer des Evakuierprozesses in einen industriell vertretbaren Rahmen zu halten, ist es von Vorteil, wenn mit Hilfe des Strömungsverteilers der effektive Evakuierquerschnitt vergrößert wird. Hierzu wäre prinzipiell ein weiteres Bauteil nötig, dass Druckstabil ausgeführt sein muss und dadurch zusätzliche Kosten verursacht.

Bei dem Evakuierprozess müssen zwei verschiedene Druckregimes betrachtet werden: Im höheren Druckbereich liegt laminare Strömung vor (Hagen-Poiseuille), der Strömungsleitwert eines Bauteils hängt hier in hohem Maße vom Querschnitt ab (bei Rohren proportional zu r⁴ und reziprok zur Länge). Poröse Materialien kann man als Parallelschaltung von Rohren mit Durchmesser ∼ Porengröße betrachten. Der flächenspezifische Strömungsleitwert von porösen Materialien ist sehr viel kleiner als von offenen Leitungen. Der Strömungsleitwert für laminare Strömung ist linear Druckabhängig. Im niedrigen Druckbereich (Gasteilchen stoßen quasi nur mit den Wänden) ist der Strömungsleitwert unabhängig vom Druck und hängt nur von der Geometrie des Bauteils ab. Abhängig von der Porengröße des Bauteils wird der molekulare Strömungsbereich bei unterschiedlich hohen Drücken erreicht. Vorzugsweise wird eine Schüttung von Zeolithkügelchen mit einem Durchmesser von 3 - 5 mm eingesetzt, die in einer gasdurchlässigen Umhüllung angeordnet ist. Sie können beispielsweise in einem Polyestergewebesäcken eingenäht sein. Diese Kügelchen spannen ausreichend große Kanäle auf, um gleichzeitig als Strömungsverteiler zu dienen, ein zusätzliches Bauteil entfällt dadurch.

Somit ist vorgesehen, dass der Strömungsverteiler durch die von einer Kugelschüttung aufgespannten Kanäle dargestellt wird.

In weiterer Ausgestaltung der Erfindung ist eine Heizeinrichtung vorgesehen, oder der Vakuumdämmkörper ist mit dieser wenigstens zweitweise verbunden.

Wird das adsorbierende Material während des Evakuiervorgangs durch die Heizeinrichtung beheizt, führt dies zu einer Verschiebung des Sorptionsgleichgewichtes in Richtung der Desorption, sodass auch bei vergleichsweise hohen Drücken die Oberfläche des adsorbierenden Materials nur minimal belegt ist. Beim Abkühlen des adsorbierenden Materials können zusätzliche Gasmoleküle angelagert werden, sodass das adsorbierende Material als Sorptionspumpe wirkt, die auch nach der Abkopplung des Evakuierstutzens bzw. nach dessen Schließen den Gasdruck innerhalb des Vakuumbereichs wirkungsvoll reduziert bzw. gering hält.

Der Vakuumdämmkörper der vorliegenden Erfindung weist zusätzlich zu dem genannten adsorbierenden Material wenigstens einen Kern auf, der vorzugsweise aus Perlit besteht.

Vorzugsweise ist vorgesehen, dass das adsorbierende Material bzw. der Strömungsverteiler unmittelbar angrenzend an den Evakuierstutzen angeordnet ist. Wie oben ausgeführt, besteht in diesem Fall ein Vorteil darin, dass der Strömungsweg der Gasteilchen zu dem Evakuierstutzen hin gering ist und des Weiteren darin, dass im Bereich des Evakuierstutzens ein sehr geringer Druck herrscht.

Des Weiteren ist es denkbar, dass das adsorbierende Material und/oder der Strömungsverteiler und/oder die Heizeinrichtung derart angeordnet ist, dass sie den Evakuierstutzen umgibt. Das adsorbierende Material bzw. der Strömungsverteiler ist im Bereich des Evakuierstutzens angeordnet. Somit ergibt sich daraus der Vorteil, dass dieses Material durch die Heizeinrichtung effektiv beheizt werden kann und somit eine günstige Desorption im Rahmen des Evakuiervorgangs und damit eine effiziente Evakuierung möglich ist.

Denkbar ist es beispielsweise, dass die Heizeinrichtung auf der einen Seite der Umhüllung des Vakuumdämmkörpers und das adsorbierende Material bzw. der Strömungsverteiler auf der anderen Seite, nämlich der Innenseite, der Umhüllung des Vakuumdämmkörpers angeordnet sind.

In einer weiteren Ausgestaltung der Erfindung ist vorgesehen, dass das adsorbierende Material bzw. der Strömungsverteiler in einem Bereich angeordnet ist, der zu dem Evakuierstutzen benachbart ist. Dies bedeutet, dass das adsorbierende Material und/oder der Strömungsverteiler nicht oder nicht nur in dem mit dem Evakuierstutzen fluchtenden Bereich, sondern auch in dazu benachbarten Bereichen angeordnet ist.

In weiterer Ausgestaltung der Erfindung ist vorgesehen, dass das adsorbierende Material und/oder der Strömungsverteiler derart angeordnet ist, dass das bei der Vakuumerzeugung durch den Evakuierstutzen hindurchtretende Gas durch das adsorbierende Material und/oder durch den Strömungsverteiler hindurchtritt und/oder dass wenigstens ein Mittel vorgesehen ist, dass den Strömungswiderstand beim Vorgang der Vakuumerzeugung verringert.

Ein Volumen von adsorbierenden Material bzw. dem Strömungsverteiler wie beispielsweise von Zeolith-Kügelchen bildet auch unter Druckbelastung ausreichenden Strömungsquerschnitt, um den Evakuierungsschritt wirkungsvoll zu beschleunigen. Denkbar ist es beispielsweise das adsorbierende Material direkt am Evakuierstutzen anzubringen. Somit kann das adsorbierende Material erfindungsgemäß zugleich als Strömungsverteiler zum Erhöhen des effektiven Evakuierungsquerschnittes dienen.

Grundsätzlich können auch andere Mittel bzw. Maßnahmen ergriffen werden, um den Strömungsquerschnitt zu erhöhen bzw. den Strömungswiderstand bei der Evakuierung zu verringern.

In weiterer Ausgestaltung der Erfindung ist vorgesehen, dass die Heizeinrichtung derart angeordnet ist, dass mittels der Heizeinrichtung der gesamte Vakuumdämmkörper beheizbar ist. In dieser Ausgestaltung der Erfindung wird somit nicht nur der Bereich des Evakuierstutzens beheizt, sondern der gesamte Vakuumdämmkörper. Da viele Kernmaterialien von Vakuumdämmkörpern adsorptive Eigenschaften, insbesondere für Wasserdampf besitzen, kann eine komplette Beheizung des Vakuumdämmkörpers sinnvoll sein, um auch die Desorption von dem Kernmaterial zu erleichtern bzw. zu beschleunigen.

In einer weiteren Ausgestaltung der Erfindung ist vorgesehen, dass das adsorbierende Material so ausgebildet ist, dass die Adsorption von Wasser und/oder Stickstoff und/oder Sauerstoff erfolgt. Vorzugsweise handelt es sich bei dem adsorbierenden Material um den wenigstens einen Getter und/oder um Zeolith-Material.

Die vorliegende Erfindung betrifft des Weiteren ein Kühl- und/oder Gefriergerät mit wenigstens einem Korpus und mit wenigstens einem gekühlten Innenraum, der von dem Korpus umgeben ist sowie mit wenigstens einem Verschlusselement, mittels dessen der gekühlte Innenraum verschließbar ist, wobei sich zwischen dem gekühlten Innenraum und der Außenwand des Gerätes wenigstens ein Zwischenraum befindet. Erfindungsgemäß ist vorgesehen, dass in diesem Zwischenraum wenigstens ein Vakuumdämmkörper mit den Merkmalen eines der Ansprüche 1 bis 9 angeordnet ist. Dieser Zwischenraum kann sich z. B. zwischen Innenbehälter und Außenwand und / oder zwischen der Innenseite der Tür etc. und deren Außenseite befinden.

Die Erfindung betrifft des Weiteren ein Verfahren zur Erzeugung eines Vakuums in einem Vakuumdämmkörper gemäß der Erfindung, wobei während und/oder vor der Erzeugung des Vakuums in dem Vakuumdämmkörper eine Beheizung des Vakuumdämmkörpers oder eines Teilbereiches des Vakuumdämmkörpers und vorzugsweise des Evakuierstutzens oder des Bereiches um den Evakuierstutzen und insbesondere eine Erwärmung des adsorbierenden Materials vorgenommen wird.

Die Heizeinrichtung kann ein fester Bestandteil des Vakuumdämmkörpers sein. Vorzugsweise ist jedoch vorgesehen, dass die Heizeinrichtung nur während des Erzeugens des Vakuums mit dem Vakuumdämmkörper in Verbindung steht und sodann von diesem wieder abgenommen bzw. entfernt wird.

Weitere Einzelheiten und Vorteile der Erfindung werden anhand eines in der Zeichnung dargestellten Ausführungsbeispiels näher erläutert.

Die einzige Figur zeigt eine Schnittansicht durch einen Vakuumdämmkörper im Bereich des Evakuierstutzens.

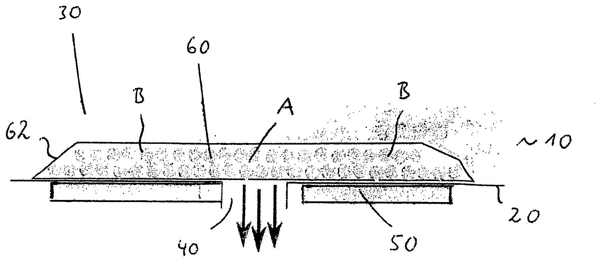

In Figur 1 ist mit dem Bezugszeichen 10 ein Teilbereich eines Vakuumdämmkörpers gemäß der Erfindung gekennzeichnet.

Dieser Vakuumdämmkörper weist eine vakuumdichte Folie bzw. eine Hochbarrierefolie 20 auf sowie ein Kernmaterial 30, bei dem es sich um eine Schüttung und beispielsweise um Perlit handeln kann.

Das Bezugszeichen 40 kennzeichnet eine Öffnung bzw. einen Evakuierstutzen, der während des Evakuiervorgangs mit einer nicht dargestellten Vakuumpumpe verbunden wird, damit gemäß Pfeilrichtung eine Strömung aus dem Vakuumbereich erzeugt wird und somit das Vakuum erzeugt wird.

Wie dies weiter aus Figur 1 hervorgeht, befindet sich in dem Bereich (in der dargestellten Strömungsrichtung beim Evakuieren) unmittelbar vor der Öffnung 40 im Vakuumbereich ein adsorbierendes Material 60, wie beispielsweise ein Trockner/Getter, z.B. Zeolith, das nicht nur in dem Bereich angeordnet ist, der mit der Öffnung 40 fluchtet, sondern auch in den dazu benachbarten Bereichen. Der fluchtende Bereich ist in der Figur mit dem Bezugszeichen A und die benachbarten Bereiche mit dem Bezugszeichen B gekennzeichnet. Diese benachbarten Bereiche können die Öffnung scheibenförmig bzw. kreisförmig umgeben.

Auf der Außenseite der Umhüllung des Vakuumkörpers ist ein Heizbereich bzw. eine Heizeinrichtung 50 angeordnet, die die Aufgabe hat, während des Evakuierens eine Beheizung des Trockners bzw. Gettermaterials zu bewirken.

Aufgrund der Tatsache, dass das Material 60 in unmittelbarer Nähe des Evakuierstutzens 40 angeordnet ist lässt sich eine besonders effiziente Evakuierung vornehmen, da dort die niedrigsten Drücke auftreten und zudem der Strömungsweg der an dem Material 60 gebundenen Gasteilchen, wie beispielsweise Wasser, Sauerstoff oder Stickstoff minimiert ist.

Die Tatsache, dass das adsorbierende Material auch unter Druckbelastung genügend Strömungsquerschnitt bietet, führt dazu, dass der Schritt der Evakuierung wirkungsvoll beschleunigt wird. Die dargestellten adsorbierenden Materialien 60 können beispielsweise in einem Vliesbeutel oder in einem sonstigen Behältnis am Evakuierstutzen angebracht werden. Auf diese Weise dient das adsorbierende Material zugleich als Strömungsverteiler zum Erhöhen des effektiven Evakuierungsquerschnitts bzw. zur Erhöhung des effektiven Strömungsleitwertes.

Die Tatsache, dass sich das adsorbierende Material im Bereich der Öffnung des Vakuumdämmkörpers befindet ermöglicht darüber hinaus eine effektive Beheizung des adsorbierenden Materials durch eine Heizeinrichtung und damit eine besonders gute Desorption von adsorbierten Gasteilchen.

Wird nach dem Evakuiervorgang der Evakuierstutzen vakuumdicht geschlossen und die Heizeinrichtung abgeschaltet kommt es zu einer Abkühlung des Materials 60. Dies wiederum führt dazu, dass noch vorhandene Gasmoleküle an dem Material angelagert werden, sodass das Material 60 als Sorptionspumpe wirkt, die auch nach Abkopplung des Evakuierstutzens, d.h. nach dem vakuumdichten Verschließen des Vakuumdämmkörpers den Gasdruck gering hält.

Wie oben ausgeführt, kann das adsorptive Material derart ausgeführt sein, dass es Wasserdampf und/oder Stickstoff und/oder Sauerstoff mit hoher Sorptionsenthalpie adsorbiert.

## Patentansprüche

1. Vakuumdämmkörper mit einer vakuumdichten Umhüllung (20), und einem Vakuumbereich, der von der Umhüllung umgeben ist, wobei die Umhüllung mit einem Evakuierstutzen (40) zur Evakuierung des Vakuumbereichs versehen ist, und sich in dem Vakuumdämmkörper ein adsorbierendes Material (60) und ein Kernmaterial (30) befinden, wobei das adsorbierende Material (60) teilweise oder insgesamt im Bereich des genannten Evakuierstutzens (40) angeordnet ist, **dadurch gekennzeichnet, dass** der Vakuumdämmkörper einen Strömungsverteiler zur Erhöhung des effektiven Evakuierquerschnittes aufweist, und der Strömungsverteiler durch das adsorbierende Material (60) gebildet ist oder dieses umfasst, wobei der Strömungsverteiler in Strömungsrichtung beim Evakuieren vor dem Evakuierstutzen (40) angeordnet ist, und der Strömungsverteiler als Kugelschüttung ausgebildet ist, die sich in einem für Gas durchlässigen Säckchen (62) oder Aufnahmebereich befindet.

2. Vakuumdämmkörper nach Anspruch 1, **dadurch gekennzeichnet, dass** der Vakuumdämmkörper mit einer Heizeinrichtung versehen ist oder mit einer Heizeinrichtung in Verbindung steht.

3. Vakuumdämmkörper nach einem der vorhergehenden Ansprüche, **dadurch gekennzeichnet, dass** das adsorbierende Material (60) unmittelbar angrenzend an den Evakuierstutzen (40) angeordnet ist und/oder derart angeordnet ist, dass sie den Evakuierstutzen (40) umgibt.

4. Vakuumdämmkörper nach einem der vorhergehenden Ansprüche, **dadurch gekennzeichnet, dass** der Strömungsverteiler unmittelbar angrenzend an den Evakuierstutzen (40) angeordnet ist und/oder derart angeordnet ist, dass er den Evakuierstutzen (40) umgibt.

5. Vakuumdämmkörper nach einem der vorhergehenden Ansprüche, **dadurch gekennzeichnet, dass** die Heizeinrichtung unmittelbar angrenzend an den Evakuierstutzen (40) angeordnet ist und/oder derart angeordnet ist, dass sie den Evakuierstutzen (40) umgibt.

6. Vakuumdämmkörper nach einem der vorhergehenden Ansprüche, **dadurch gekennzeichnet, dass** das adsorbierende Material (60) und/oder der Strömungsverteiler und/oder die Heizeinrichtung in einem Bereich angeordnet ist, der zu dem Evakuierstutzen (40) benachbart ist.

7. Vakuumdämmkörper nach einem der vorhergehenden Ansprüche, **dadurch gekennzeichnet, dass** das adsorbierende Material (60) und/oder der Strömungsverteiler derart angeordnet ist, dass das bei der Vakuumerzeugung durch den Evakuierstutzen (40) hindurchtretende Gas durch das adsorbierende Material (60) und/oder durch den Strömungsverteiler hindurchtritt und/oder dass wenigstens ein Mittel vorgesehen ist, das den Strömungswiderstand beim Vorgang der Vakuumerzeugung verringert.

8. Vakuumdämmkörper nach einem der vorhergehenden Ansprüche, **dadurch gekennzeichnet, dass** die Heizeinrichtung derart angeordnet ist, dass mittels der Heizeinrichtung der gesamte Vakuumdämmkörper beheizbar ist.

9. Vakuumdämmkörper nach einem der vorhergehenden Ansprüche, **dadurch gekennzeichnet, dass** das adsorbierende Material (60) derart ausgebildet ist, dass dieses Wasser und/oder Stickstoff und/oder Sauerstoff adsorbiert und/oder dass es sich bei dem adsorbierenden Material (60) um wenigstens einen Getter und/oder Zeolith handelt.

10. Kühl- und/oder Gefriergerät mit einem Korpus; und
einem gekühlten Innenraum, der von dem Korpus umgeben ist; sowie
einem Verschlusselement, mittels dessen der gekühlte Innenraum verschließbar ist, wobei
sich zwischen dem gekühlten Innenraum und der Außenwand des Gerätes wenigstens ein Zwischenraum befindet,
**dadurch gekennzeichnet, dass**
in dem Zwischenraum wenigstens ein Vakuumdämmkörper mit den Merkmalen eines der Ansprüche 1 bis 9 angeordnet ist.

11. Verfahren zur Erzeugung eines Vakuums in einem Vakuumdämmkörper gemäß einem der Ansprüche 1 bis 10, **dadurch gekennzeichnet, dass**
während und/oder vor der Erzeugung des Vakuums in dem Vakuumdämmkörper eine Beheizung des Vakuumdämmkörpers oder eines Teilbereichs des Vakuumdämmkörpers und vorzugsweise des Evakuierstutzens (40) oder des Bereiches um den Evakuierstutzen und insbesondere des adsorbierenden Materials (60) vorgenommen wird.

## Claims

1. A vacuum insulation body, comprising
a vacuum-tight casing (20), and
a vacuum region which is surrounded by the casing, wherein the casing is provided with an evacuation port (40) for evacuating the vacuum region, and wherein an adsorbent material (60) and a core material (30) are present in the vacuum insulation body, wherein the adsorbent material (60) partly or completely is arranged in the region of the evacuation port (40),
**characterized in that**
the vacuum insulation body comprises a flow distributor for increasing the effective evacuation cross-section, and
the flow distributor is formed by or includes the adsorbent material (60), wherein
the flow distributor is arranged upstream the evacuation port (40) in the flow direction during the evacuation, and
the flow distributor is formed as a pebble bed, which is located in a gas-permeable sack (62) or reception region.

2. The vacuum insulation body according to claim 1,
**characterized in that** the vacuum insulation body is provided with a heating device or is connected with a heating device.

3. The vacuum insulation body according to any one of the preceding claims,
**characterized in that** the adsorbent material (60) is arranged directly adjacent to the evacuation port (40) and/or is arranged such that it surrounds the evacuation port (40).

4. The vacuum insulation body according to any one of the preceding claims,
**characterized in that** the flow distributor is arranged directly adjacent to the evacuation port (40) and/or is arranged such that it surrounds the evacuation port (40).

5. The vacuum insulation body according to any one of the preceding claims,
**characterized in that** the heating device is arranged directly adjacent to the evacuation port (40) and/or is arranged such that it surrounds the evacuation port (40).

6. The vacuum insulation body according to any one of the preceding claims,
**characterized in that** the adsorbent material (60) and/or the flow distributor and/or the heating device is arranged in a region which is adjacent to the evacuation port (40).

7. The vacuum insulation body according to any of the preceding claims,
**characterized in that** the adsorbent material (60) and/or the flow distributor is arranged such that the gas passing through the evacuation port (40) during the generation of vacuum passes through the adsorbent material (60) and/or through the flow distributor and/or that at least one means is provided which reduces the flow resistance during the process of vacuum generation.

8. The vacuum insulation body according to any one of the preceding claims,
**characterized in that** the heating device is arranged such that by means of the heating device the entire vacuum insulation body can be heated.

9. The vacuum insulation body according to any of the preceding claims,
**characterized in that** the adsorbent material (60) is formed such that the same adsorbs water and/or nitrogen and/or oxygen and/or that the adsorbent material (60) is at least one getter and/or zeolite.

10. A refrigerator and/or freezer, with
a body; and
a cooled interior space which is surrounded by the body, as well as a closure element, by means of which the cooled interior space can be closed, wherein
between the cooled interior space and the outer wall of the appliance at least one interspace is located,
**characterized in that**
in the interspace at least one vacuum insulation body with the features of any of claims 1 to 9 is arranged.

11. A method for generating a vacuum in a vacuum insulation body according to any of claims 1 to 10,
**characterized in that**
during and/or before the generation of vacuum in the vacuum insulation body, heating of the vacuum insulation body or of a partial region of the vacuum insulation body and preferably of the evacuation port (40) or the region around the evacuation port and in particular of the adsorbent material (60) is effected.

## Revendications

1. Corps d'isolation sous vide avec
une enveloppe étanche (20) au vide, et
une zone de vide, qui est entourée de l'enveloppe, dans lequel l'enveloppe est pourvue d'un embout d'évacuation (40) pour l'évacuation de la zone sous vide, et dans lequel dans le corps d'isolation sous vide se trouve un matériau adsorbant (60) et un matériau de noyau (30), dans lequel le matériau adsorbant (60) est disposé en partie ou en totale dans la zone dudit embout d'évacuation (40),
**caractérisé en ce que**
le corps d'isolation sous vide présente un distributeur d'écoulement pour l'augmentation de la section transversale d'évacuation effective, et
le distributeur d'écoulement est formé par le matériau adsorbant (60) ou comprend celui-ci, dans lequel
le distributeur d'écoulement est disposé devant l'embout d'évacuation (40) lors de l'évacuation en direction de l'écoulement, et
le distributeur d'écoulement est formé comme lit de billes qui se trouve dans un sachet transmissif pour le gaz (62) ou dans une zone de logement.

2. Corps d'isolation sous vide selon la revendication 1, **caractérisé en ce que** le corps d'isolation sous vide est pourvue d'un moyen chauffant ou est en liaison avec un moyen chauffant.

3. Corps d'isolation sous vide selon l'une des revendications précédentes, **caractérisé en ce que** le matériau adsorbant (60) est disposé directement adjacent à l'embout d'évacuation (40) et/ou est disposé de sorte qu'il entoure l'embout d'évacuation (40).

4. Corps d'isolation sous vide selon l'une des revendications précédentes, **caractérisé en ce que** le distributeur d'écoulement est disposé directement adjacent à l'embout d'évacuation (40) et/ou est disposé de sorte qu'il entoure l'embout d'évacuation (40).

5. Corps d'isolation sous vide selon l'une des revendications précédentes, **caractérisé en ce que** le moyen chauffant est disposé directement adjacent à l'embout d'évacuation (40) et/ou est disposé de sorte qu'il entoure l'embout d'évacuation (40).

6. Corps d'isolation sous vide selon l'une des revendications précédentes, **caractérisé en ce que** le matériau adsorbant (60) et/ou le distributeur d'écoulement et/ou le moyen chauffant est disposé dans une zone qui est adjacente à l'embout d'évacuation (40).

7. Corps d'isolation sous vide selon l'une des revendications précédentes, **caractérisé en ce que** le matériau adsorbant (60) et/ou le distributeur d'écoulement est disposé de sorte que lors de la production de vide le gaz passant à travers l'embout d'évacuation (40) passe à travers le matériau adsorbant (60) et/ou le distributeur d'écoulement et/ou que au moins un moyen est prévu, qui réduit la résistance à l'écoulement lors de la procédure de la production de vide.

8. Corps d'isolation sous vide selon l'une des revendications précédentes, **caractérisé en ce que** le moyen chauffant est disposé de telle manière qu'au moyen du moyen chauffant, le corps d'isolation complet est chauffable.

9. Corps d'isolation sous vide selon l'une des revendications précédentes, **caractérisé en ce que** le matériau adsorbant (60) est formé de sorte que celui-ci absorbe de l'eau et/ou de l'azote et/ou de l'oxygène et/ou qu'au matériau adsorbant (60) est au moins un getter et/ou du zéolite.

10. Appareil de réfrigération et/ou de congélation comprenant un corps ; et
un espace intérieur refroidi, qui est entouré par le corps, ainsi qu'un élément de fermeture, au moyen duquel l'espace intérieur refroidi peut être fermé, dans lequel
se trouve entre l'espace intérieur refroidi et la paroi extérieure de l'appareil au moins un espace intermédiaire,
**caractérisé en ce que**
dans l'espace intermédiaire est disposé au moins un corps d'isolation sous vide avec les caractéristiques d'un des revendications 1 à 9.

11. Procédé pour la production d'un vide dans un corps d'isolation sous vide selon l'une des revendications 1 à 10,
**caractérisé en ce que**
pendant et/ou avant la production du vide dans le corps d'isolation sous vide est prévu un chauffage du corps d'isolation sous vide ou d'une zone partielle du corps d'isolation sous vide et de préférence du bout d'évacuation (40) ou de la zone autour du bout d'évacuation et en particulier du matériau adsorbant (60).
